# EUROPEAN PATENT APPLICATION

(11) **EP 1 164 809 A1**
(43) Date of publication of application: **19.12.2001**
(21) Application number: 00310954.3
(22) Date of filing: 08.12.2000
(51) Int. Cl.: H04Q 7/38, H04B 7/26

(54) **Channel allocation method for facilitating downlink power control and downlink adaptive beam forming**

(30) Priority: 31.05.2000 US 583490
(71) Applicant: LUCENT TECHNOLOGIES INC., Murray Hill, New Jersey 07974-0636 (US)
(72) Inventor: Seymour, James Paul, Lake Hiawatha, New Jersey 07034 (US); Shamsunder, Sanyogita, Basking Ridge, New Jersey 07920 (US)
(74) Representative: Buckley, Christopher Simon Thirsk

(57) **Abstract**

A method for transmitting information in a wireless TDMA communication system whereby such method allows downlink information to be transmitted during an entire slot assigned to a user of the communication system thus enabling the communication system to perform downlink adaptive beam forming and downlink power control. An allocation message that contains identification codes assigning users to a particular slot of uplink and downlink frames is first transmitted to the users during an entire slot of a first frame of a downlink block of frames. The corresponding slots of ensuing downlink frames are then used to transmit information to users during which downlink adaptive beam forming and/or downlink power control can be done. Corresponding slots of uplink frames are used by users to transmit information to the system equipment. Legacy users, which transmit and receive information in accordance with prior art methods, can simultaneously use the system with the users that transmit and receive information in accordance with the method of the present invention.

## Description

### Background of the Invention

### Field of the Invention

The present invention is generally related to the use of communication channel resources in a Time Division Multiple Access (TDMA) communication system.

### Description of the Related Art

Wireless communication systems use various schemes to allow a plurality of users to use (i.e., share simultaneously) a particular bandwidth. The bandwidth is part of or all of the band of frequencies allocated to the communication system for conveying (i.e., transmitting and receiving) information. The schemes used are known as multiple access schemes. One multiple access scheme that is widely used in many wireless communication systems is called Time Division Multiple Access (TDMA).

A TDMA wireless communication system allows multiple users to use the same bandwidth by creating time frames (hereinafter "frames") comprising time slots (hereinafter "slots") within which each user is allowed to convey their information. Each slot or a group of slots are defined and are assigned to a particular user. Thus, each user is allowed to transmit and/or receive information in that user's assigned slot. In this manner, many users are able to use the same bandwidth thus increasing the user and/or information capacity of the system.

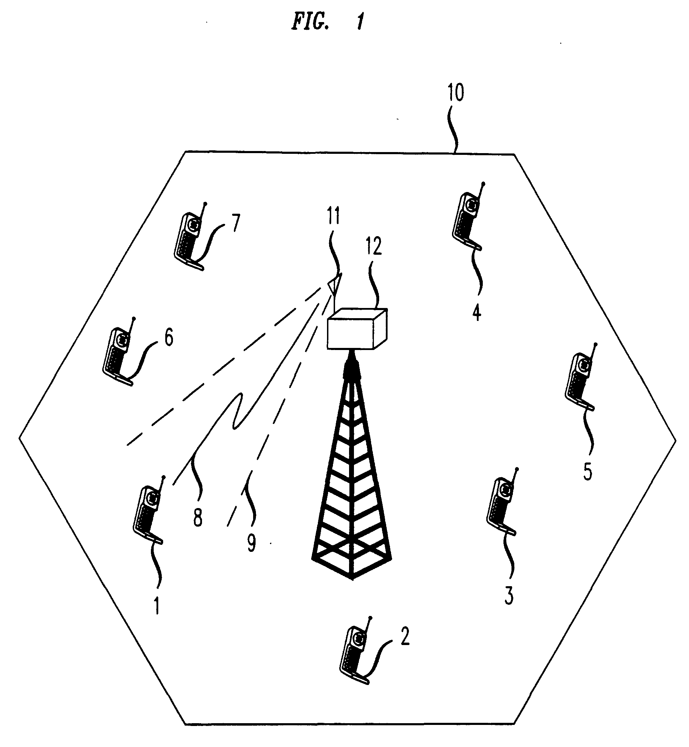

FIG. 1 depicts a typical portion of a wireless cellular TDMA communication system comprising a base station that is serving cell 10. For ease of discussion, only one cell is shown; it will be understood that a typical cellular TDMA system comprises a plurality of cells. Cell 10 is a symbolic representation of the geographical area or physical terrain covered by the base station. The base station comprises base station equipment such as radio 12 and antenna 11. Radio 12 comprises transmitting, receiving and processing equipment that process communication signals. The communication signals carry information such as voice, data, and video signals. The base station equipment is part of system equipment, which are owned and operated by system operators. The system equipment are operated in accordance with a protocol. A protocol is a set of rules and/or procedures that are used to initiate, maintain and/or terminate communications between users or between users and the system equipment. Protocols are part of well known standards that are used throughout various parts of the world. For example, a well known standard is the North American Time Division Multiple Access (NA-TDMA); another well known standard is the Groupe Speciale Mondiale (GSM) standard typically used in European TDMA communication systems. There are other standards which are followed by data communication systems; that is, systems in which the information being carried by the communication signals is data such as computer generated digital information. One well known standard followed by the data communication systems is the General Packet Radio Service (GPRS) standard; another well known data communication system standard is the Enhanced Data GSM Evolution (EDGE) or EGPRS.

The users depicted in FIG. 1 are subscribers of the system. The term "user" hereinafter is used interchangeably with the term "subscriber" to indicate an entity (i.e., person, facility or a combination thereof) who is allowed access (when possible) to the communication system. Access to the communication system is the ability of a subscriber to make use of the resources (e.g., system equipment, communication channels) of the communication system. Users attempt to gain access to the communication system with user equipment such as cell phones and wireless computers. Thus, a user equipment is any type of equipment typically used by subscribers of communication systems.

The base station equipment and other system equipment communicate with the users via wireless communication link 8. Communication link 8 comprises a plurality of communication channels. Channels in which users transmit signals to the base station are called uplink channels. Channels in which the base station transmits signals to one or more users are called downlink channels. When a user wishes to gain access to the communication system, a certain procedure is implemented in accordance with the protocol being followed by the communication system. For example, referring to FIG. 1, suppose User 1 wishes to gain access to the communication system where the system complies with the EDGE or EGPRS standard. During a particular time slot, User 1 transmits a message containing a number generated by a random number generator in User 1's equipment. The message is transmitted over a Random Access Channel (RACH). The RACH is a contention based channel meaning that at any time, a plurality of users may be requesting access to the communication system over this channel.

Radio 12 receives many such numbers from various users desiring to obtain access to the communication system. User 1's random number is detected by radio 12 which transmits (via a downlink channel) such message in a corresponding time slot (of another frame) back to User 1. User 1 detects its random number being transmitted by radio 12 signifying that User 1's message was detected by radio 12. Then, in accordance with the EGPRS or GPRS standard User 1 is assigned, a 3 bit code called an Uplink State Flag (USF). The USF is specific to a time slot. The USF is an identification code associated with a particular user assigned to a time slot. The base station equipment grants permission to the user by sending the user's USF in a downlink message. The USF is an allocation message (i.e., a block of information) which assigns a certain slot of the frames of the next group of frames transmitted over the uplink channel to that particular user. The USF is included in downlink transmissions only and it indicates the owner of the corresponding time slot of the next group of uplink frames. With a 3 bit code, 8 different USF values are possible. When the USF is 111, it indicates that the next group of uplink frames is a "free for all" (i.e., it is a RACH). When the user detects its USF in the responding message within a particular slot, it then knows that it has been given permission to transmit information over the uplink channel in the corresponding slots of a group of frames.

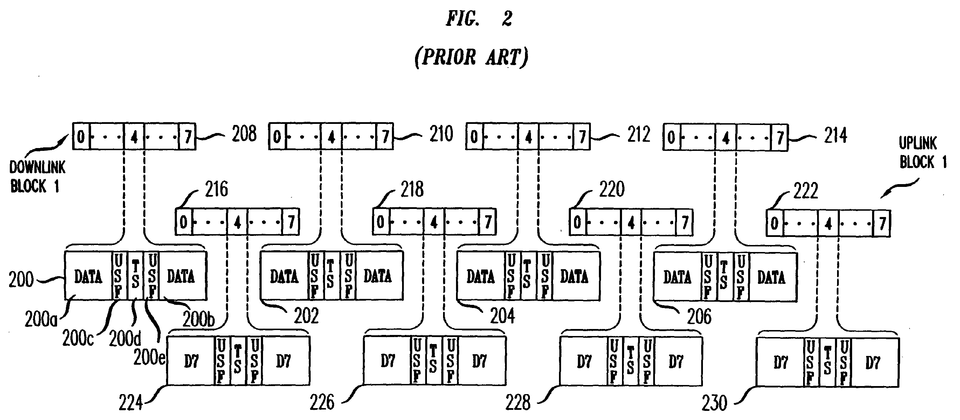

Referring to FIG. 2 there is shown the format of the frames and their slots for a EGPRS and/or EDGE compliant communication system. The frames are arranged in groups where each group of four frames is called a block. Each frame has eight slots (e.g., slots 0 to 7). The format of each slot is dictated by the standard. The format of a slot is the particular arrangement of certain information (in the form of bits) within the defined slot. For illustrative purposes only, the format for the fifth slot (i.e., slots 200, 202, 204, 206) of each of the frames (208-214) in downlink block 1 is shown. The fifth slot (and the other slots) has various fields where a field is a portion of a slot. In slot 200, for example, there are two DATA fields (200a, 200b), two USF fields (200c and 200e) and a Training Sequence (TS) field (200d). The TS field contains information that helps the users receiving the message to synchronize with the information being transmitted by the base station equipment. The DATA fields 200a and 200b represent information being transmitted to a particular user and USF fields 200c and 200e represent identification code information being transmitted to another user. Thus, in EGPRS and EDGE communication systems, the information in the downlink frames is intended for different users. Uplink block I contains information being transmitted by user equipment. In the example shown, frames 216, 218, 220 and 222 contain information from users located in cell 10. The fifth slot of each of the uplink frames (i.e., 224, 226, 228 and 230) is shown as containing information (i.e., D7) from User 7.

Downlink block 1 contains information transmitted over a downlink channel by radio 12 and antenna 11 of the base station in response to User 1 and other users' request for access to the communication system. User 1 and all other users who transmitted a message requesting access to the communication system receive downlink block 1 and attempt to determine whether the USF in downlink block 1 matches their particular USF. When the USF in block 1 matches User 1's USF, then User 1 has been given permission to transmit information (i.e., D1) in the four frames of the next uplink block (not shown). Note, that User 7 is transmitting information (i.e., D7) during the fifth slot of each of the frames of uplink block 1. In accordance with the EDGE and EGPRS standards, the USF transmitted by the base station equipment is spread over the four frames of downlink block 1. The USF contains 3 bits, but is coded to 12 bits (with GMSK modulation) or 36 bits (with 8PSK modulation) and is interleaved over 4 bursts. A burst is the amount of information transmitted during one slot. Coding is a well known technique in which additional bits are added to information to increase redundancy in the string of bits thus allowing for error correction. Because the USF bits are spread over four corresponding slots of four consecutive frames (i.e., the fifth slot of frames 208-214), User 1 (and all of the users who transmitted a message requesting access) must receive all four frames of block 1 to determine whether the USF transmitted by the base station equipment matches its particular USF. There are several problems that occur due to the spreading of the USF information over four consecutive frames.

First, it is extremely difficult, if not impossible, to perform downlink adaptive beam forming and downlink power control when the USF information is spread over four consecutive frames. Downlink adaptive beam forming is a practice whereby the antenna is directed toward a requesting user to improve the reception of signals by the user. Downlink adaptive beam forming attempts to direct as much of the radio energy being transmitted by the base station antenna to a particular intended user. The practice of downlink adaptive beam forming helps reduce co-channel interference experienced by a user. Co-channel interference is the reception by user equipment of signals from other (usually neighboring) base stations and/or other sources. For example, if User 1 is assigned the fifth slot, then during the fifth slot radio equipment 12 along with antenna 11 of FIG. 1 should direct as much as possible of the radio energy distribution (i.e., beam 9 of FIG. 1) to User 1. Any other signal from other base stations or other communication systems are unwanted as they adversely affect the signals from the base station of cell 10; these other signals are called co-channel interference. In downlink adaptive beam forming antenna 11 is directed so that its beam (particular distribution of radio energy, i.e., beam 9) impinges upon User 1 as shown in FIG. 1. Typically the directing of antenna 11 is done electronically by processing various components of the signal being transmitted to User 1; such processing takes a certain amount of time to perform.
Because the USF signal is spread over four slots of four different frames, it is desirable to direct antenna 11 at User 1 for the duration of the four slots to enhance the detection of the USF information. However, directing the antenna at User 1, adversely affects other users' ability to receive data intended for them. For example, referring back to FIG. 2, Data fields 200a and 200b of slot 200 is intended for User 3 while the USF information in slot 200 is intended for User 1. To perform adaptive beam forming, antenna 11 would have to be directed at User 3 for the duration of Data fields 200a and 200b, and antenna 11 would have to be directed at User 1 during the occurrence of the USF fields 200c and 200e. Typically, for EDGE and GPRS systems, a block has a time duration of 20 milliseconds. Each frame is approximately 4.7 milliseconds in length and each slot is 577 microseconds long. Therefore, the various fields within each slot are on the order of hundreds of microseconds or less; it is very difficult, if not impossible, to redirect antenna 11 in such relatively short time periods.

Downlink power control is a practice where the base station equipment attempt to transmit signals to a user at efficient power levels. Antenna 11 is directed (electronically, as discussed above) at the intended user and radio 12 transmits the signals to the user. The power level of the user's responding signal is measured (during one slot period) to determine whether radio 12 is transmitting at a proper level. In some communication systems the user equipment transmits a message back to the base station equipment advising the base station to either increase, decrease or maintain the current power level. The power level of the next signal transmitted to the user is adjusted accordingly. It is thus that the power level of the downlink signals is adjusted allowing radio 12 to transmit at efficient power levels. Therefore, in order to perform downlink power control, antenna 11 has to be directed to a particular user for at least the duration of one slot in a downlink frame. Because information for more than one user is placed in each slot, it is not feasible to direct the antenna at one user for the duration of an entire slot; such a practice would adversely affect the reception of downlink signals by another user for whom some of the slot information is intended. As with beam forming, antenna 11 would have to be directed to different users for relatively short periods of time during the occurrence of a slot. As explained above, it is extremely difficult, if not impossible, to redirect antenna 11 for such relatively short time periods.

Another problem with the spreading of the USF information over four frames is the delay experienced by the user who has been given permission to transmit in the next uplink block. For example, referring again to FIG. 2, User 1 must decode all of the USF information spread over 20 milliseconds before it can determine if it has access to the next uplink block. After receiving and decoding the USF information from slots 200-206, User 1 determines that it has permission to transmit its data (i.e., D1) in the fifth slot of the next uplink block (not shown). Therefore, there is at least a 20 millisecond time gap during which User 1 is not transmitting information over its uplink channel. For certain type of signals, the 20 millisecond gap during which a user is not transmitting any signal is noticeable and unacceptable in many applications. For example, for voice signals a 20 millisecond gap would be noticeable to the listener of the signals. Also, for video signals being transmitted in real time (i.e., signals are transmitted as they are created) a 20 millisecond gap may not be acceptable.

What is therefore, needed is a format for transmitting an allocation message to users of a TDMA communication system that allows downlink adaptive beam forming and downlink power control to be performed by the communication system. What is also needed is a format which allows real time signals such as voice and real time video to be transmitted with significantly reduced noticeable gaps or interruptions.

### Summary of the Invention

The present invention provides a method for transmitting and receiving information in a communication system whereby downlink adaptive beam forming and downlink power control can be performed. An allocation message is first transmitted to users of the communication system during one portion of a defined time period whereby such allocation message assigns users to that portion of the defined time period. Information is transmitted in immediately ensuing defined time periods to prevent the occurrence of noticeable gaps in the transmission and reception of information; the system equipment transmit information to users during entire corresponding portions assigned to such users allowing downlink adaptive beam forming and downlink power control to be performed. Also, users transmit information during entire corresponding portions of an ensuing group of defined time periods. Further, the method of the present invention is able to recognize legacy users and simultaneously service the legacy users along with the other users.

The method of the present invention can be implemented in a wireless TDMA communication system which complies with the EDGE, EGPRS or GPRS standards. In a preferred embodiment, the defined time period is a frame. Each frame is divided into eight portions called "slots." The frames are arranged into groups of frames called downlink blocks and uplink blocks. First, during a slot of a frame in a downlink block, the system equipment broadcast an allocation message to users of the communication system. Those users who recognize their identification codes (i.e., New Uplink State Flag, hereinafter "NUSF") are able to transmit information during the corresponding slot of the frames of the next uplink block (i.e., ensuing block of frames). During the transmission of information by the base station, the system equipment is able to perform downlink adaptive beam forming or downlink power control because transmission can occur during an entire slot. The users can transmit information in the entire corresponding slots of the frames of the ensuing uplink block. Also, the system equipment may transmit can Stealing Bit (SB) pattern along with the allocation message. When the SB is set to a certain value, the system equipment transmits a USF code, as per current existing standards, along with the NUSF codes allowing legacy users to use the communication system simultaneously with other users; that is the format of the prior art is implemented simultaneously with the format of the method of the present invention.

### Brief Descriptions of the Drawings

FIG. 1 depicts a portion of cellular TDMA communication system;
FIG. 2 depicts a prior art format for transmitting allocation messages to users of a TDMA communication system;
FIG. 3 depicts the method of the present invention;
FIG. 4 depicts the method of the present invention in which the prior art method of allocating resources can also be performed.

### Detailed Description

The method of the present invention provides a format in which allocation messages are transmitted to a plurality of users of a TDMA communication system whereby such format allows the procedures of downlink power control or downlink beamforming or both to be performed by the system equipment. The allocation messages identify which users have been assigned to which portions of defined time periods. First, an allocation message is transmitted during a portion of a downlink defined time period. A downlink defined time period is a length of time during which transmissions from system equipment (e.g.. a base station) to one or more users of a communication system are allowed to occur by the standard being followed; that is, the transmissions are sent over a downlink channel. Similarly, an uplink defined time period is a length of time during which transmissions from users to system equipment are allowed to occur; these transmissions occur over uplink channels. The method of the present invention further provides a format where each of the entire corresponding portions of downlink defined time periods are made available for transmission of information to one particular user. In another embodiment. transmission of information for more than one user during the entire corresponding portion also occurs as in the case of interleaving information transmitted to more than one user. The case for interleaving the information being transmitted by the system equipment is discussed herein. After the allocation message has been transmitted, the system equipment are able to transmit information during entire corresponding portions of immediately ensuing downlink defined time periods. Because the entire of each of the corresponding portions of downlink defined time periods is available for transmission of information to a particular user, the system equipment of the TDMA communication system are able to perform downlink power control and/or adaptive beam forming if so desired. Also, entire corresponding portions of uplink defined time periods are available for users to transmit information to the system equipment.

In another embodiment of the method of the present invention, the format is modified so that the allocation message contains additional information to be used by legacy users of the communication system; that is, the additional information identifies those users who transmit and receive information as per the prior art formats. In this manner, the system equipment can accommodate simultaneously user equipment which transmit information in accordance with prior art formats and user equipment which transmit information in accordance with the method of the present invention. For ease of explanation, the method of the present invention is described in terms of a cellular TDMA communication system that complies with the EGPRS and/or EDGE standards. It will be understood that the method of the present invention is applicable to other communication standards and is not limited in any manner by the EGPRS and/or EDGE standards.

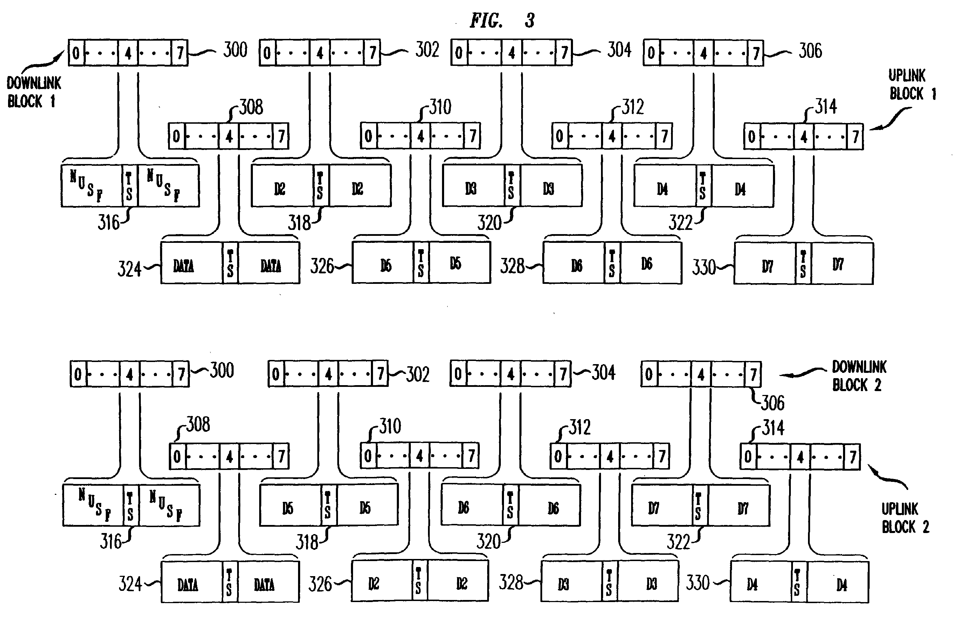

Referring now to FIG. 3, there is shown the method of the present invention. The downlink defined time periods are frames 300, 302, 304 and 306. Each frame is divided into eight equal portions called slots. For clarity and ease of explanation, the format for only the fifth slot of each of the frames is shown. It will be readily obvious that other slots of the frames may have the same or different format as the fifth slot. The frames are grouped into blocks where each block contains four frames.

For downlink block 1, the fifth slot of frame 300 (i.e., slot 316) contains the New Uplink State Flags (NUSF) for a plurality of users. The system equipment broadcast (i.e., transmit to users) the allocation message during fifth slot of frame 300 of downlink block 1. For the example shown, three NUSF's for users 2, 3 and 4 are transmitted during the fifth slot of frame 300. The three NUSF's in the fifth slot of frame 300 is the allocation message. It will be readily obvious that the allocation message can contain any number of NUSF's. Similar to the USF, the NUSF is an identification code for a user of the communication system. However, the NUSF's are preferably modulated using the well known modulation technique of Quadrature Phase Shift Keying (QPSK). Each NUSF is preferably coded using 72 bits; thus each NUSF has 3 bits which are expanded into 72 bits to allow for error correction at the user equipment. It will be readily understood that the user equipment is properly modified to allow reception of the QPSK modulated NUSF code. The fifth slot of each of the remaining frames of block 1 (i.e., slots 318, 320 and 322) are assigned to users 2, 3 and 4 respectively. The system equipment transmit information during the fifth slot of the immediately ensuing frames of downlink block 1 (i.e., frames 302, 304 and 306). In particular, slot 318 contains information (i.e., D2) being transmitted to user 2. Slot 320 of frame 304 contains information (D3) being transmitted to user 3. Slot 322 of frame 306 contains information (D4) being transmitted to user 4. The information transmitted to users 2, 3 and 4 are received by the user equipment which allows the system equipment to perform downlink adaptive beam forming and downlink power control as explained below.

For uplink block 1, the fifth slot of the first frame, i.e., slot 324 of frame 308, can be used in any one of several ways. Slot 324 can be used as a free slot available to any user who wishes to make a request to the system (i.e., a RACH). The request can be, for example, a request to gain access or a request to terminate communication. Further slot 324 can be used as an extra channel through which users transmit their information; this further provides an opportunity for users who need immediate uplink access to advise the base station that they need to use available uplink channels.

Because all of the NUSF's are transmitted during the fifth slot, the intended users are able to determine whether they have access to the system after the fifth slot of frame 300, i.e., slot 316, has occurred. Thus, the fifth slot of the immediately ensuing downlink frames are assigned to the users identified by the NUSF information in slot 316. Therefore, the identified users need not wait for four frames to determine whether they can transmit information in the next block; the intended users will make such a determination after one slot of frame I of downlink block 1, and will be able to receive information in immediately ensuing frames of downlink block 1 and transmit information in corresponding uplink slots (slots 324, 326, 328 and 330) of the corresponding frames (i.e., frames 308, 310, 312 and 314) of the next uplink block, i.e., uplink block 2.

Further, because the slots (of the downlink frames) contain information for only one user, the system equipment is able to perform downlink power control and/or adaptive beam forming. In other words, radio equipment 12 is able to direct antenna 11 toward User 2 during the entire occurrence of slot 318, direct antenna 11 toward User 3 during the entire occurrence of slot 320 and direct antenna 11 toward User 4 during the entire occurrence of slot 322. The assigned slots are not shared amongst users. It should be noted that all of the slots of the method of the present invention contain a TS field. Although not shown, it should also be noted that a user's information can be interleaved between corresponding slots of corresponding frames of different downlink blocks. For example, a portion of User 2's information (i.e., D2) can be transmitted during slot 318 as discussed above and the remaining portion of User 2's information is transmitted during the corresponding slot of the next block (i.e., slot 318 of downlink block 2). The user equipment are modified in any well known manner to recognize when and how the information is being interleaved across multiple slots. Interleaving is an operation whereby various portion of information are transmitted during different time slots so as to change the time order of the information. The fifth slots of the frames of uplink block 1 (i.e., slots 326, 328 and 330) are being used by Users 5, 6 and 7 respectively.

For block 2, the same format is followed. In block 2, the fifth slot of frame 300 (i.e., slot 316) contains NUSF for Users 5, 6 and 7. The system equipment receive information from the users during the fifth slot of the uplink frames. In particular, information (i.e., D5, D6, D7) is transmitted in the fifth slot of frame 302 (i.e., slot 318) by User 5, the fifth slot of frame 304 (i.e., slot 320) by User 6 and the fifth slot of frame 306 (i.e., slot 322) by User 7. As discussed above, as a result of the NUSF's transmitted during slot 316 of downlink frame 300 of block 1, Users 2, 3 and 4 transmit information in their corresponding slots 326, 328 and 330 of block 2 respectively. Slot 324 of block 2 is used in the same manner as slot 324 of block 1.

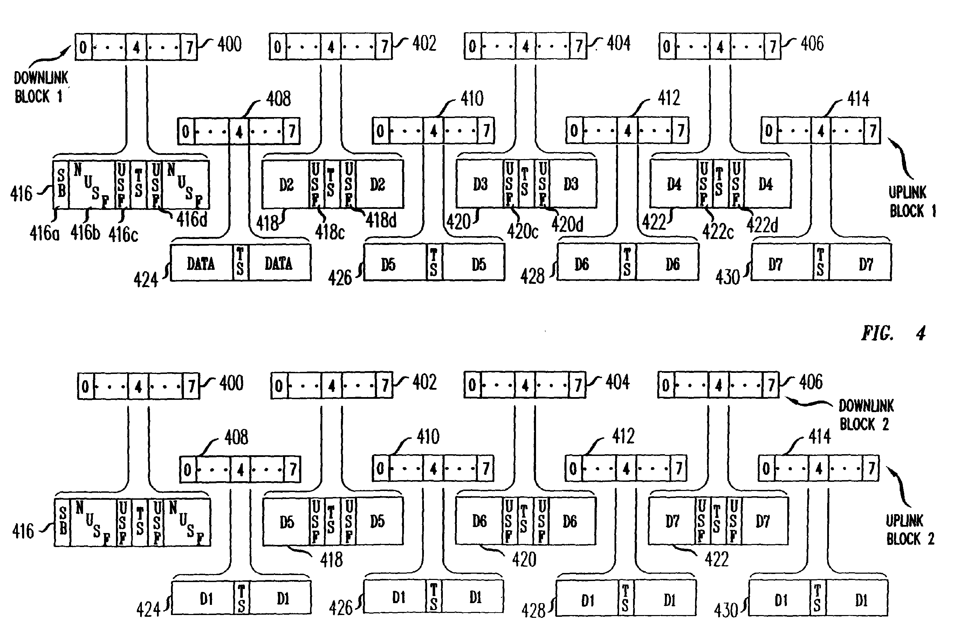

Referring now to FIG. 4, there is shown a modified format for the slots which modified format allows legacy users to also gain access to the communication system designed in accordance with the method of the present invention. An indicator field (SB) is added to the fifth slot (i.e., slot 416) of frame 400. Again, the fifth slot is used solely for illustrative purposes; other slots can be similarly formatted. The indicator field indicates whether slots formatted in accordance with the method of the present invention are also formatted for legacy users. The legacy users are those users which decode the USF in accordance with the prior art method described in the background section of this specification; that is, the USF is spread over four corresponding slots of different frames and is therefore decoded over the four corresponding slots of the four different frames. Slot 416 comprises indicator field 416a.

For the example shown in FIG. 4, indicator field 416a of frame 416 of downlink block 1 is called Stealing Bits (SB). The SB are set when they are equal to a particular value (i.e., a combination of "1" and "0" bits). One arrangement is that when SB are set. legacy users are recognized by the system, but when SB are not set, legacy users are not recognized by the system. The recognition of a legacy user means that the system will spread the USF bits for that user over four frames of a downlink block and also that user will be allowed to use all four frames of the ensuing uplink block to transmit its information. When SB are set, a portion of the data field of the corresponding slots of the immediately ensuing frames is "stolen" and such portion is used to store part of the USF spread over four slots. For the example shown in FIG. 4, the USF fields are 416c, 416d, 418c, 418d, 420c, 420d, 422c and 422d. The use of SB is meant to communicate to users capable of practicing the method of the present invention that the prior art USF format has also been included in the current block of 4 frames.

Still referring to FIG. 4, suppose NUSF field 416b of downlink frame 416 of block 1 contains the NUSF for Users 2, 3 and 4 giving such users permission to receive information during the corresponding slots of the immediately ensuing downlink frames of block 1, i.e., frames 418, 420 and 422. The system equipment can then perform downlink adaptive beam forming and downlink power control during corresponding slots of the downlink frames. Suppose further that SB field 416a of downlink frame 416 of block 1 is set so as to allow legacy User 1 to use the system. Each of the USF fields of slots 416, 418, 420 and 422 contains a portion of the USF code for User 1. In such a case, the allocation message is not only the NUSF code but also includes the USF codes and the SB pattern. Therefore in block 2, User 1 is allowed to transmit information during the fifth slot (i.e., slot 424, 426, 428 and 430) of the four uplink frames of block 2 as shown in FIG. 4. Note that the corresponding slots of downlink block 2 (i.e., slots 416, 418, 420 and 422) will use the format in accordance with the method of the present invention for the non-legacy users. However, in an ensuing block (not shown) the system transmits information over four downlink frames to User 1 as per the prior art method. Therefore, the system is able to service simultaneously legacy and non-legacy users. When SB field 416a is not set, the method of the present invention returns to the format discussed above and depicted in FIG. 3.

## Claims

1. A method for transmitting information in a communication system, the method
**CHARACTERIZED BY** THE STEPS OF:
providing a format whereby entire portions of defined time periods are made available for transmission of information;
transmitting an allocation message during a portion of a defined time period whereby the allocation message assigns users of the communication system to corresponding portions of ensuing defined time periods; and
transmitting information to a user of the communication system during an entire corresponding portion of an immediately ensuing defined time period which corresponding portion is assigned to the user.

2. The method of claim 1 where the communication system is a TDMA communication system.

3. The method of claim 1 where the communication system complies with the EGPRS and/or EDGE standards.

4. The method of claim 1 where the step of transmitting an allocation message is performed by system equipment of the communication system.

5. The method of claim 1 where the step of transmitting information to a user is performed by system equipment of the communication system which also performs downlink adaptive beam forming during the corresponding portion.

6. The method of claim 1 where the step of transmitting information to a user is performed by system equipment of the communication system which also performs downlink power control during the corresponding portion.

7. The method of claim 1 where the step of transmitting information to a user further comprises the step of interleaving the information between corresponding defined time periods.

8. The method of claim 3 where the step of transmitting an allocation message comprises transmitting a 72 bit NUSF code for each user assigned to the corresponding portion which code is QPSK modulated.

9. The method of claim 8 where the step of transmitting information to a user further comprises the steps of performing downlink adaptive beam forming for the user.

10. The method of claim 8 where the step of transmitting information to a user further comprises the step of performing downlink power control for the user

11. The method of claim 3 where the step of transmitting an allocation message further comprised the step of transmitting Stealing Bit pattern indicating whether legacy users are allowed to use the communication system.

12. The method of claim 11 where the allocation message comprises NUSF codes for non-legacy users, USF codes for legacy users and a Training sequence.

13. A method for receiving information by user equipment of a communication system, the method comprises the steps of:
providing a format for receiving information from system equipment whereby entire corresponding portions of defined time periods are made available for receiving information;
receiving an allocation message from the system equipment during a portion of a defined time period whereby the allocation message assigns users of the communication system to corresponding portions of ensuing defined time periods; and
receiving information from the system equipment during an entire corresponding portion of an immediately ensuing defined time period which corresponding portion is assigned to the user.

14. The method of claim 13 whereby the portions of a defined time period are slots of downlink frames of a TDMA communication system in compliance with the EDGE or EGPRS or both standards and the allocation message is an NUSF code.

15. The method of claim 14 whereby the allocation message is a QPSK modulated 72 bit code

16. The method of claim 14 whereby the allocation message further contains USF codes and a SB pattern allowing legacy to use the system simultaneously with users receiving information in accordance with the format of the method of the present invention.

17. The method of claim 14 whereby the system equipment is allowed to perform the procedures of adaptive downlink beamforming and downlink power control during the occurrence of the corresponding slots of immediately ensuing downlink frames.

18. The method of claim 14 whereby the step of receiving information comprises receiving interleaved information
